## Europäisches Patentamt

## European Patent Office

## Office européen des brevets

(19)

(11) Veröffentlichungsnummer: **0 283 463**
**B1**

(12) **EUROPÄISCHE PATENTSCHRIFT**

(45) Veröffentlichungstag der Patentschrift:
**10.10.90**

(21) Anmeldenummer: **88890034.7**

(22) Anmeldetag: **18.02.88**

(51) Int. Cl.⁵: **B05D 5/08**, B29C 43/18

(54) Verfahren zum Beschichten eines Stützträgers mit einem kunstharzgebundenen Reibbelag.

(30) Priorität: **25.02.87 AT 409/87**

(43) Veröffentlichungstag der Anmeldung:
**21.09.88 Patentblatt 88/38**

(45) Bekanntmachung des Hinweises auf die Patenterteilung:
**10.10.90 Patentblatt 90/41**

(84) Benannte Vertragsstaaten:
**BE DE ES FR GB IT SE**

(56) Entgegenhaltungen:
**FR-A- 1 527 572**
**FR-A- 2 380 134**
**GB-A- 740 248**

(73) Patentinhaber: **Miba Sintermetall Aktiengesellschaft,
Hauptstrasse 3, A-4663 Laakirchen(AT)**

(72) Erfinder: **Hek, Friedrich. Dipl.-Ing., Dorfbauernschaft 8b,
D-4543 Lienen(DE)**
Erfinder: **Kapl, Gerhard, Dr., Robert-Stolz-Strasse 18,
A-4020 Linz(AT)**

(74) Vertreter: **Hübscher, Heiner, Dipl.-Ing. et al,
Spittelwiese 7, A-4020 Linz(AT)**

**Beschreibung**

Die Erfindung bezieht sich auf ein Verfahren zum Beschichten eines Stützträgers mit einem kunstharzgebundenen Reibbelag, der über eine Haftvermittlungsschicht mit dem Stützträger verbunden und durch ein Verpressen und ein Wärmeaushärten einer Reibpulvermischung hergestellt wird, die ein durch Wärmezufuhr aushärtbares Kunstharz enthält.

Um kunstharzgebundene Reibbeläge auf Stützträgern herstellen zu können, ist es bekannt, eine geeignete Reibpulvermischung mit einem Kunstharzpulver als Bindemittel zu versetzen und diese Trockenmischung zu einem Preßling vorzupressen, bevor dieser Preßling auf den in eine Metallform eingelegten Stützträger aufgelegt und mit dem Stützträger unter Wärmezufuhr verpreßt wird. Zur Verbindung des Preßlings und des Stützträgers wird der Stützträger üblicherweise nach einer Sandstrahlbehandlung mit einer Haftvermittlungsschicht, beispielsweise einem Kleber, versehen. Nach der Heißverpressung werden die Stützträger mit dem Reibbelag aus der Metallform ausgestoßen und üblicherweise in Kammeröfen zum Aushärten des Reibbelages gelagert. Die genauen Abmessungen der Reibbeläge werden im Anschluß an die Ofenhärtung durch eine spanabhebende Nachbearbeitung sichergestellt. Nachteilig bei diesen bekannten Herstellungsverfahren ist, daß aufgrund des vergleichsweise großen Volumens der Trockenmischung die Reibpulvermischung zu Preßlingen vorverdichtet werden, wobei die Forderung nach der Handhabkarkeit dieser Preßlinge eine Mindestdicke für die Preßlinge bedingt, was das Herstellen insbesondere von dünneren Reibbelägen ohne spanabhebende Nachbearbeitung der ausgehärteten Reibbeläge unmöglich macht. Durch das vom Preßdruck abhängige Ausmaß der Verdichtung der Reibpulvermischung kann lediglich eine bestimmte Porosität des Reibbelages sichergestellt werden.

Um die Schwierigkeiten beim Aufbringen einer Trockenmischung auf einen Stützträger zu umgehen, ist es außerdem bekannt (FR-A 1 527 572), die einzelnen Bestandteile des Reibbelages mit dem wärmehärtbaren Kunstharz als Bindemittel unter Wärmezufuhr zu mischen, so daß diese Bestandteile miteinander vor dem Aufbringen auf einen Stützträger und einer anschließenden Druckformung verklebt werden.

Schließlich ist es bekannt (FR-A 2 380 134), eine Trägerbahn mit einem reibarmen, thermoplastischen Belag zu beschichten, indem der thermoplastische Belag zunächst in Pulverform aufgebracht und dann kontinuierlich geschmolzen wird, bevor er nach einer entsprechenden Abkühlung durch einen kontinuierlichen Walzvorgang auf die gewünschte Schichtstärke gebracht wird.

Der Erfindung liegt somit die Aufgabe Zugrunde, ein gattungsgemäßes Verfahren so zu verbessern, daß die Herstellung von Reibbelägen mit einer bestimmten Porosität vereinfacht und eine spanabhebende Nachbearbeitung der Reibbeläge nach dem Verpressen und der Wärmeaushärtung im allgemeinen unnötig wird.

Die Erfindung löst die gestellte Aufgabe dadurch, daß zunächst die Reibpulvermischung auf den Stützträger in einer bei der gewünschten Verdichtung die Enddicke des Reibbelages ergebenden Schichtstärke aufgebracht wird und daß dann die aufgebrachte Reibpulverschicht auf eine Temperatur über dem Schmelzintervall des aushärtbaren Kunststoffharzes erwärmt und vor dem Erreichen eines die nachträgliche Verpressung beeinträchtigenden Aushärtegrades auf die Enddicke des Reibbelages verpreßt wird.

Da durch die Erwärmung der Reibpulvermischung auf eine Temperatur über dem Schmelzintervall des aushärtbaren Kunststoffharzes in kurzer Zeit eine für die Handhabung der Reibpulverschicht ausreichende Formstabilität durch eine Verklebung der einzelnen Teilchen der Reibpulvermischung untereinander und mit dem Stützträger erzielt wird, kann die Reibpulvermischung ohne vorherige Verdichtung zu einem Vorpreßling unmittelbar auf den entsprechend vorbereiteten Stützträger aufgebracht werden, und zwar in einer Schichtstärke, die bei der gewünschten Verdichtung der Reibpulvermischung die Enddicke des Reibbelages ergibt. Wird demnach die auf den Stützträger aufgetragene Reibpulverschicht auf das geforderte, beispielsweise durch Distanzstücke bestimmte Endmaß verpreßt, so wird zugleich mit dem Endmaß auch die angestrebte Porosität für den Reibbelag sichergestellt, und zwar unabhängig von der aufgebrachten Preßkraft. Es kann daher die sonst notwendige, spanabhebende Nachbearbeitung entfallen, insbesondere dann, wenn die im Reibbelag vorzusehenden Rillen oder Sicken beim Preßvorgang eingeformt werden. Die durch die Verwendung eines Trennmittels entstehende Preßhaut kann durch ein geringfügiges Anschleifen der Belagoberfläche leicht entfernt werden.

Der Reibbelag muß selbstverständlich auf die geforderte Enddicke verpreßt werden, bevor die durch die Erwärmung der aufgetragenen Reibpulverschicht eingeleitete Aushärtung einen Aushärtegrad erreicht hat, der die nachträgliche Verpressung beeinträchtigen kann. Aus diesem Grunde erfolgte die der Verpressung vorausgehende Erwärmung der Reibpulverschicht auf eine Temperatur über dem Schmelzintervall nur kurzzeitig, wobei durch eine Abkühlung der Verlauf der Aushärtung gesteuert werden kann. Wird die Reibpulverschicht vor dem Verpressen auf 70 bis 220° C erwärmt, so wird beim Einsatz der üblichen Kunstharzpulver eine für die angestrebte Formstabilität der Pulverschicht ausreichende Behandlungszeit vom 1 bis 10 Minuten erforderlich. Die Werkzeugtemperatur beim Verpressen der Reibpulverschicht nach dieser Wärmebehandlung beträgt durchschnittlich 180 bis 220°C. Die Aushärtung des Werkstückes kann bei 150 bis 230° C erfolgen.

Um einerseits eine bessere Verbindung zwischen der aufgetragenen Reibpulverschicht und dem Stützträger und anderseits die Bindung der Teilchen der Reibpulvermischung untereinander zu unterstützen, kann in weiterer Ausbildung der Erfindung die auf den Stützträger aufgebrachte Reibpulverschicht während oder nach ihrer Erwärmung, aber vor dem Verpressen an den Stützträger angedrückt werden. Damit wird eine bessere Verkrallung mit der Haftvermittlungsschicht auf dem Stützträger erreicht. Da die Teilchen des Kunstharzpulvers sich beim Erweichen zusammenziehen, besteht die Gefahr, daß sie ihren Kontakt mit den anliegenden Teilchen der Reibpulvermischung verlieren, was die Bindung dieser Teilchen beeinträchtigt. Durch eine entsprechende Druckanwendung kann der Abstand zwischen den Teilchen entsprechend verringert werden, so daß eine ausreichende Verklebung der Teilchen des Reibpulvergemisches eintritt. Mit Drücken von $5.10^{-3}$ bis $10.10^{-3}$ N/mm$^2$ kann im allgemeinen der angestrebte Effekt sichergestellt werden.

Dieses zwischenzeitliche Andrücken der Reibpulverschicht an den Stützträger empfiehlt sich insbesondere dann, wenn der Stützträger auf beiden Seiten mit einem Reibbelag versehen werden soll, weil in diesem Falle die Belastung der bereits auf den Stützträger aufbebrachten und kurzzeitig auf eine Temperatur über dem Schmelzintervall erwärmten Reibpulverschicht durch die notwendige Handhabung des Werkstückes beim Wenden des Stützträgers und beim Auftragen der zweiten Reibpulverschicht entsprechend größer ist. Ein Andrücken der zweiten Reibpulverschicht nach deren kurzzeitigen Erwärmung über das Schmelzintervall ist meist nicht erforderlich, weil das Werkstück im unmittelbaren Anschluß zum gemeinsamen Verpressen der beiden Reibpulverschichten in ein Preßwerkzeug eingelegt werden kann.

Die bei einer vorgegebenen Auftragsmenge je Flächeneinheit durch das Verpressen der Reibpulverschicht auf die geforderte Enddicke bestimmte Porosität des verpreßten Reibbelages kann im Bedarfsfall nachträglich noch verringert werden, wenn die Reibpulverschicht nach ihrer Verpressung auf die Enddicke mit einem Flüssigharz getränkt und anschließend unter Wärmezufuhr vollständig ausgehärtet wird, wobei zwischenzeitlich eine Trocknung erfolgen kann. Diese nachträgliche Tränkung des Reibbelages mit einem Flüssigharz bringt außerdem eine zusätzliche Verfestigung des Reibbelages mit sich, die vor allem dann vorteilhaft ausgenützt werden kann, wenn aufgrund des vor dem Verpressen erreichten Aushärtegrades die Gefahr besteht, daß bereits gebildete Harzbrücken zerstört werden.

Da die Reibpulvermischung dosiert auf den Stützträger in einer vorbestimmten Schichtstärke aufzubringen ist, ist auf eine riesel- oder streichfähige Reibpulvermischung ohne Faseranteil zu achten, die auf der Basis von Petrol-Koks, Graphit, Silikaten bzw. Metallen zusammengesetzt sein kann, wobei ein vergleichsweise hoher Anteil an Petrol-Koks von beispielsweise 70 Gew.% durchaus möglich ist.

Zur Haftvermittlung können die Stützträger an ihren zu beschichtenden Oberflächen mittels visköser Klebeharze, z. B. Phenolharz, in einer Dicke von ca. 0,1 mm bestrichen werden. In diesen Anstrich kann dann unmittelbar ein Rauhpulver, das vorzugsweise aus dem Hauptbestandteil der Reibpulvermischung besteht, mit einer eng eingeschränkten Siebfraktion von z. B. 0,15 bis 0,20 mm eingestreut werden. Die Streumenge wird dabei so eingestellt, daß nur ca. 30 bis 40 % der bestreuten Fläche mit dem Rauhpulver bedeckt wird. Vor dem vollständigen Aushärten der Klebeharzschicht kann dann die eigentliche Reibpulverschicht aufgestreut werden. An Stelle eines viskosen Klebeharzes kann aber selbstverständlich auch ein Harzpulver, z. B. ein Epoxidharz, eingesetzt werden, auf das vorzugsweise die Reibpulvermischung unmittelbar aufgetragen wird, um mit dem Pulver der Haftvermittlungsschicht gemeinsam erwärmt zu werden.

Ausführungsbeispiel 1:

Auf ein entsprechend vorbehandeltes, mit einer Haftvermittlungsschicht versehenes Stahlblech als Stützträger wird eine Reibpulvermischung aus 77 Gew.% Graphit, 15 Gew.% Zirkonsand und 8 Gew.% Phenolharz in einer Streunmenge von 0,14 g/cm$^2$ mit einer Schichtstärke von 1,8 mm aufgestreut. Nach einer Erwärmung auf 250° C während einer Zeitspanne von 15 s wurde die Reibpulverschicht mit einem Druck von $5.10^{-3}$ N/mm$^2$ an den Stützträger angepreßt und anschließend der Stützträger in der gleichen Weise auf der gegenüberliegenden Oberfläche beschichtet. Das beidseits beschichtete Stahlblech wurde dann bei einer Temperatur von ca. 200° C mit Hilfe profilierter Preßstempel so verpreßt, daß die Enddicke der beiden Reibpulverschichten je 1,15 bzw. 1,20 mm betrug. Die für die Vorwärmung der Reibpulverschicht über das Schmelzintervall erforderliche Behandlungsdauer wird durch einen auffallenden Farbumschlag der Reibpulverschicht erkannt. Bei einer Temperatur von 170° C wurde dann die Aushärtung während einer Zeitdauer von 1 Stunde abgewartet.

Ausführungsbeispiel 2:

Unter sonst gleichen Bedingungen des Ausführungsbeispiels 1 wurde eine Reibpulvermischung aus 25 Gew.Teilen Kupfer, 11 Gew.Teilen Zink, 13 Gew.Teilen Eisen, 30 Gew. Teilen Graphit, 8 Gew.Teilen Zirkonsand und 7 Gew.Teilen Phenolharz in einer Streumenge von 0,24 g/cm$^2$ in einer Schichtstärke von 1,8 mm auf den Stützträger aufgetragen. Beim Andrücken der Reibpulverschicht an den Stützträger nach einer kurzzeitigen Erwärmung für 15 s auf eine Temperatur von 250° C wurde die Schichtstärke auf 1,6 mm verringert. Die anschließende Verpressung des Reibbelages bei einer Temperatur von 200° C brachte eine Dickenreduktion auf das Endmaß von 1,2 bis 1,25 mm. Dieser verpreßte Reibbelag wurde mit in Methanol verdünntem Phenolharz getränkt, wobei der getränkte Reibbelag einer Vortrocknung während einer Zeitspanne von 2 bis 3 Stunden unterworfen wurde. Die Aushärtung des Reibbelages erfolgte bei einer Temperatur von 150° C innerhalb von 1 Stunde.

Ausführungsbeispeil 3:

Auf ein entsprechend vorbehandeltes, mit einer Haftvermittlungsschicht versehenes Stahlblech als Stützträger wird eine Reibpulvermischung aus 50 Gew.% Petrolkoks, 20 Gew. % Graphit, 20 Gew. % Epoxidharz, 5 Gew. % Zirkonsand, 4 Gew.% Zellulose und 1 Gew. % Gleitmittel in einer Schichtstärke von 1,8 mm aufgetragen. Nach einer Erwärmung auf 110° C während einer Zeitspanne von 5 Minuten wurde die Schicht stärke durch ein Andrücken an den Stützträger auf 1,6 mm verringert. Anschließend wurde der Stützträger auf der gegenüberliegenden Seite in gleicher Weise beschichtet. Das beidseits beschichtete Stahlblech wurde dann bei einer Temperatur von ca. 200° C mit Hilfe profilierter, mit einer Trennschicht versehener Preßstempel so verpreßt, daß die Enddicke der beiden Reibpulverschichten je 0,8 mm betrug. Die nachfolgende Aushärtung erfolgte bei 200° C innerhalb von 3 Stunden. Die Preßhaut wurde durch ein geringfügiges Anschleifen der beiden Belagoberflächen entfernt.

## Patentansprüche

1. Verfahren zum Beschichten eines Stützträgers mit einem kunstharzgebundenen Reibbelag, der über eine Haftvermittlungsschicht mit dem Stützträger verbunden und durch ein Verpressen und ein Wärmeaushärten einer Reibpulvermischung hergestellt wird, die ein durch Wärmezufuhr aushärtbares Kunstharz enthält, dadurch gekennzeichnet, daß zunächst die Reibpulvermischung auf den Stützträger in einer bei der gewünschten Verdichtung die Enddicke des Reibbelages ergebenden Schichtstärke aufgebracht wird und daß dann die aufgebrachte Reibpulverschicht auf eine Temperatur über dem Schmelzintervall des aushärtbaren Kunststoffharzes erwärmt und vor dem Erreichen eines die nachträgliche Verpressung beeinträchtigenden Aushärtegrades auf die Enddicke des Reibbelages verpreßt wird.

2. Verfahren nach Anspruch 1, dadurch gekennzeichnet, daß die auf den Stützträger aufgebrachte Reibpulverschicht während oder nach ihrer Erwärmung, aber vor dem Verpressen an den Stützträger angedrückt wird.

3. Verfahren nach Anspruch 1 oder 2, dadurch gekennzeichnet, daß die Reibpulverschicht nach ihrer Verpressung auf die Enddicke mit einem Flüssigharz getränkt und anschließend unter Wärmzufuhr vollständig ausgehärtet wird.

## Claims

1. A process for coating a support with a synthetic-resin-bound friction lining which is connected to the support by way of a coupling layer and which is produced by the press-moulding and heat curing of a friction powder mixture containing a heat-curable synthetic resin, characterised in that the friction powder mixture is first applied to the support in a layer thickness resulting at the required compression in the final thickness of the friction lining, whereafter the applied friction powder layer is heated to a temperature above the melting range of the curable synthetic resin and, before an extent of curing impairing subsequent press moulding is reached, is press moulded to the final thickness of the friction lining.

2. A process according to claim 1, characterised in that the friction powder layer applied to the support is pressed on to the same during or after heating but before press moulding.

3. A process according to claim or 2, characterised in that after press moulding to final thickness the friction powder layer is impregnated with a liquid resin, then completely cured with heating.

## Revendications

1. Procédé pour revêtir un support d'une garniture de friction liée par une résine synthétique, qui est fixée au support par une couche génératrice d'adhérence et est formée par compression et durcissement à chaud d'un mélange de poudre de matière de friction qui contient une resine synthétique durcissable par un apport de chaleur, caractérisé par le fait que le mélange de poudre de matière de friction est tout d'abord déposé sur le support sous une épaisseur de couche qui donnera l'épaisseur finale de la garniture de friction lorsqu'on aura atteint la densification voulue, et par le fait qu'ensuite, la couche de poudre de matière de friction ainsi déposée est portée à une température supérieure à l'intervalle de fusion de la résine synthétique durcissable et comprimée à l'épaisseur finale de la garniture de friction avant qu'on n'ait atteint un degré de durcissement préjudiciable à la compression ultérieure.

2. Procédé selon la revendication 1, caractérisé par le fait que la couche de poudre de friction déposée sur le support est pressée sur le support pendant ou après le chauffage, mais avant la compression.

3. Procédé selon la revendication 1 ou 2, caractérisé par le fait que, après sa compression à l'épaisseur finale, la couche de poudre de matière de friction est imprégnée d'une résine liquide et qu'ensuite elle subit son durcissement final avec apport de chaleur.